# EUROPÄISCHE PATENTSCHRIFT

(11) **EP 2 183 162 B1**
(45) Veröffentlichungstag und Bekanntmachung des Hinweises auf die Patenterteilung: **11.05.2011**
(21) Anmeldenummer: 08785067.3
(22) Anmeldetag: 25.07.2008
(51) Int. Cl.: B65B 21/20, B65G 47/91

(54) **PACKERKOPF**
PACKER HEAD
TÊTE DE ROBOT D'EMBALLAGE

(30) Priorität: 23.08.2007 DE 102007039850
(43) Veröffentlichungstag der Anmeldung: 12.05.2010
(73) Patentinhaber: KHS GmbH, 44143 Dortmund (DE)
(72) Erfinder: JUNGHANS, Joachim, 60326 Frankfurt (DE)
(86) Internationale Anmeldenummer: PCT/EP2008/006114
(87) Internationale Veröffentlichungsnummer: WO 2009/024246

(56) Entgegenhaltungen:
- EP-A- 0 647 579
- DE-A1- 1 928 397
- DE-A1- 2 900 584
- DE-A1-102005 039 842
- GB-A- 999 282
- NL-A- 8 304 111
- US-A- 3 300 945
- US-A- 5 993 144

## Beschreibung

Die Erfindung bezieht sich auf einen Packerkopf gemäß Oberbegriff Patentanspruch 1.

Packerköpfe dieser Art sind bekannt und werden insbesondere dazu verwendet, um Flaschen oder dergleichen Behälter als Behältergruppen mit jeweils mehreren Behältern aus Kisten, beispielsweise Flaschenkästen, auszupacken oder aufzunehmen und auf ein Transportband abzusetzen oder aber umgekehrt in Gassen geführte bzw. an einem Abnahmebereich in mehreren Reihen oder Gassen bereitstehende Behälter als Behältergruppen aufzunehmen und sie anschließen an einem Abgabebereich abzusetzen, beispielsweise in dort bereitstehende Kisten einzusetzen. Hierbei ist es in der Regel erforderlich, die jeweilige von dem Packerkopf aufgenommene Behältergruppe bzw. die an Greifern oder Packtulpen des Packerkopfes hängend gehaltenen Behälter nach dem Aufnehmen und vor dem Absetzen am Absetz- oder Ablagebereich neu zu formieren, um beispielsweise die Formation, d.h. die Anordnung, die die Behälter relativ zueinander an der Abnahmeposition in der Behältergruppe aufweisen, so zu ändern, dass die Formation dann der am Ablagebereich erforderlichen Formation, beispielsweise der Gefacheinteilung eines Flaschenkastens entspricht.

Um diese Änderung der Formation zu ermöglichen, Ist es bekannt, die Greifer bzw. Packtulpen jeweils an Aufnahmen oder Schlitten des Packerkopfes vorzusehen, die (Aufnahmen oder Schlitten) im Betrieb in zwei senkrecht zueinander verlaufenden und horizontalen oder im Wesentlichen horizontalen Verstellachsen verschiebbar sind. Die Aufnahmen oder Schlitten sind über Ziehlaschenketten miteinander verbunden, so dass durch Strecken und Stauchen der Ziehlaschenketten beispielsweise mit einem Pneumatikzylinder zwei unterschiedliche Formationen, z.B. mit in beiden Verstellachsen unterschiedlichen Abständen zwischen benachbarten Packtulpen möglich sind. Da die mit dem Packerkopf möglichen Formationen der Behältergruppen durch die verwendeten Ziehlaschenketten vorgegeben sind, ist es bei Änderungen in der Formation erforderlich, die Ziehlaschenketten auszutauschen, was mit einem erheblichen Arbeitsaufwand verbunden ist.

Ebenfalls bekannt sind Vorrichtungen nach der NL 8304111. Diese Schrift schlägt eine vergleichbare Vorrichtung vor, bei welcher die Ziehlaschenketten durch das Zusammenwirken einer Kombination aus Druckfedern und Zuggewindespindeln ersetzt wurden. Bei dieser Vorrichtung sind die Packtulpen ebenfalls einzeln an jeweils einem Schlitten gehalten sind. Weiterhin sind die einzelnen Schlitten auf in X-bzw. Y-Richtung angeordneten Führungsstangen beweglich gehalten. Sowohl in X-, als auch in Y-Richtung sind zwischen den einzelnen Schlitten Druckfedern angeordnet, welche die Schlitten auf Abstand von einander halten. Jeweils eine der in X- bzw. Y-Richtung vorgesehenen Führungsstangen ist als Zuggewindespindel ausgebildet, so dass Schlitten - gegen die Kraftwirkung der zwischen ihnen angeordneten Druckfedern - gegeneinander vorgespannt werden können. Nachteilig an dieser Anordnung ist, dass die Kraftwirkungen der einzelnen Federn voneinander abweichen können, so dass die genaue Position eines Schlittens nicht genau bestimmt ist. Ebenfalls ist es von Nachteil, dass die Schlitten und somit auch die Packtulpen lediglich in Richtung der vorgesehenen Führungsstangen bewegt werden können.

Ebenfalls bekannt wurde eine Vorrichtung nach der US 5,993,144. Diese Schrift befasst sich mit einem Bedienwerkzeug, welches dazu dient, Werkstücke von einem ersten Tiefzieh-, Schmiede- oder Stanzwerkzeug zu einem zweiten Tiefzieh-, Schmiede- oder Stanzwerkzeug zu fördern, wobei dieses Bedienwerkzeug zur Verbesserung der Arbeitsabläufe in der metallverarbeitenden Industrie, nämlich zur Verbesserung der Arbeitsabläufe innerhalb einer Pressen-Transfer-Straße dient.

Dazu sieht diese Schrift Insbesondere vor, dass die Verfahrbarkeit von Teilelementen der Vorrichtung durch die Ermöglichung einer Addition von Teilwegen gesteigert wird, ohne dass dazu die gesamte Vorrichtung entsprechend vergrößert werden müsste. Nachteilig an dieser Vorrichtung ist, dass die von der Vorrichtung gehaltenen Werkstücke relativ zueinander lediglich in einer Richtung verstellbar sind.

Aufgabe der Erfindung ist es, diesen Nachteil zu vermeiden und einen Packerkopf aufzuzeigen, der eine Abnahme und/oder Ablage von Behältergruppen in unterschiedlichsten Formationen ermöglicht, und zwar ohne ein mechanisches Austauschen von Ziehlaschenketten oder ähnlichen mechanischen Positioniereinrichtungen. Zur Lösung dieser Aufgabe ist ein Packerkopf entsprechend dem Patentanspruch 1 ausgebildet.

Bei dem erfindungsgemäßen Packerkopf sind die Greifer oder Packtulpen jeweils an Aufnahmen oder Schlitten vorgesehen, die in einer Verstellebene senkrecht oder im Wesentlichen senkrecht zur Achse der an den Packtulpen hängend gehaltenen Behälter gesteuert verfahrbar sind, d.h. z.B. in wenigstens zwei diese Verstellebene definierenden Verstellachsen. Zumindest ein Verstellschlitten ist dabei so ausgebildet, dass die Packtulpe relativ zu diesem in der X-Y-Ebene eine gesteuerte lineare Bewegung und/oder Drehbewegung ausführen kann. Mit der Erfindung sind die unterschiedlichsten Formationen der Behälter in den Behältergruppen sowohl beim Abnehmen, als auch beim Ablegen möglich, ohne das ein Austausch von Ziehlaschenketten oder ähnlichen mechanischen Positioniereinrichtungen erforderlich ist. Die Erfindung ermöglicht es somit insbesondere, unterschiedliche Behälterkästen ohne mechanische Umstellung in ein und derselben Anlage zu verarbeiten, d.h. z.B. Behälterkästen die hinsichtlich Länge und/oder Breite und/oder Anzahl und/oder Anordnung der Behälter bzw. Gefache sehr unterschiedlich sind.

Die Steuerung der die Packtulpen tragenden Aufnahmen oder Schlitten erfolgt vorzugsweise programmgesteuert durch einen Rechner. Zusätzlich zu der gesteuerten Verfahrbarkeit sind die einzelnen Packtulpen bei dem erfindungsgemäßen Packerkopf bevorzugt auch individuell ansteuerbar. Als Antriebe für die verfahrbaren Aufnahmen bzw. Schlitten oder aber auch als Aufnahme selbst sind die unterschiedlichsten Stellantriebe geeignet, beispielsweise Linearmotoren, Schritt- oder Servomotoren usw. Dabei ist unter dem Begriff Servomotor im Rahmen dieser Anmeldung auch zu verstehen, dass mehrere Motoren gesteuert durch einen Rechner aufeinander abgestimmte Bewegungen ausführen.

Weiterbildungen, Vorteile und Anwendungemöglichkeiten der Erfindung ergeben sich auch aus der nachfolgenden Beschreibung von Ausführungsbeispielen und aus den Figuren.

Der Inhalt der Ansprüche wird zu einem Bestandteil der Beschreibung gemacht.

Die Erfindung wird im Folgenden anhand der Figuren an Ausführungsbeispielen näher erläutert. Es zeigen:
- Fig. 1: in vereinfachter schematischer Darstellung eine Draufsicht auf eine Schlitten- bzw. Kreuzschlittenanordnung eines Packerkopfes;

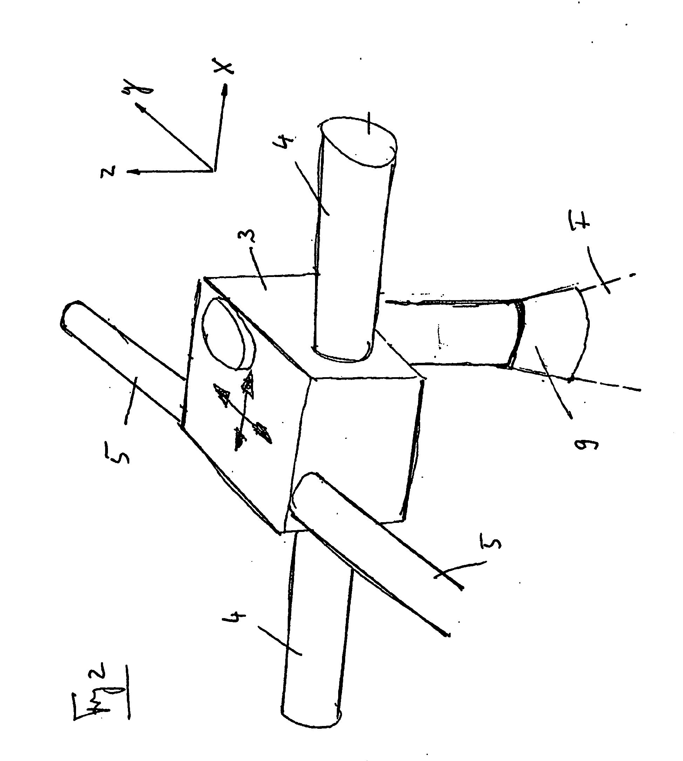

- Fig. 2: in einer perspektivischen Einzeldarstellung einen Kreuzschlitten der Kreuzschlittenanordnung der Figur 1, zusammen mit einer an dem Kreuz- schlitten vorgesehenen Packtulpe;
- Fig. 3 u. 4: in den Positionen a) und b) unterschiedliche Behälterformationen zur Erläuterung der Arbeitsweise des Packerkopfes der Figuren 1 und 2;
- Fig. 5: in vereinfachter Darstellung in Draufsicht einen Kreuzschlitten des erfindungsgemäßen Packerkopfes;
- Fig. 6: in Positionen a) und b) verschiedene Behälterformationen zur Erläuterung der Arbeitsweise des Packerkopfes mit Kreuzsch litten der Figur 5.

Zum besseren Verständnis sind in den Figuren jeweils mit X, Y und Z die drei senkrecht zu einander verlaufenden Raumachsen, die horizontale X-Achse, die horizontale Y-Achse und die vertikale Z-Achse angegeben.

In den Figuren ist 1 ein Packerkopf einer nicht näher dargestellten Anlage zum Umsetzen von Behälter- oder Flaschengruppen von einer Abnahmeposition bzw. von einem Abnahmebereich an eine Ablageposition bzw. an einen Ablagebereich, beispielsweise zum Einpacken von in einem mehrspurigen Flaschenstrom bzw. in Gassen über einen Transporteur an die Abnahmeposition zugeführten Flaschen F als Flaschengruppe in Kisten oder aber umgekehrt zum Aufnehmen von Flaschen F als Flaschengruppe aus Kisten und zum Absetzen dieser Flaschengruppe auf einen Transporteur.

Der Packerkopf 1 besteht im Wesentlichen aus einem Rahmen 2 mit einer Vielzahl von Aufnahmen oder Kreuzschlitten 3 und aus einer Vielzahl von stangenartigen Führungs- und Betätigungselementen 4 und 5, von denen die parallel zueinander und im Abstand voneinander angeordneten Führungs- und Betätigungselemente 4 mit ihren Achsen jeweils in horizontaler Richtung, d.h. in der X-Achse und die ebenfalls parallel zueinander angeordneten und voneinander beabstandeten Führungs- und Betätigungselemente 5 mit ihren Achsen in horizontaler Richtung und senkrecht zu den Führungs- und Betätigungselementen 4, d.h. in der Y-Achse orientiert sind.

Weiterhin sind bei der dargestellten Ausführungsform sämtliche Führungs- und Betätigungselemente 4 mit ihren Achsen in mindestens einer horizontalen Ebene (X-Y-Ebene) und sämtliche Führungs- und Betätigungselemente 5 mit Ihren Achsen ebenfalls in mindestens einer horizontalen Ebene (X-Y-Ebene) angeordnet, allerdings oberhalb der Führungs- und Betätigungselemente 4.

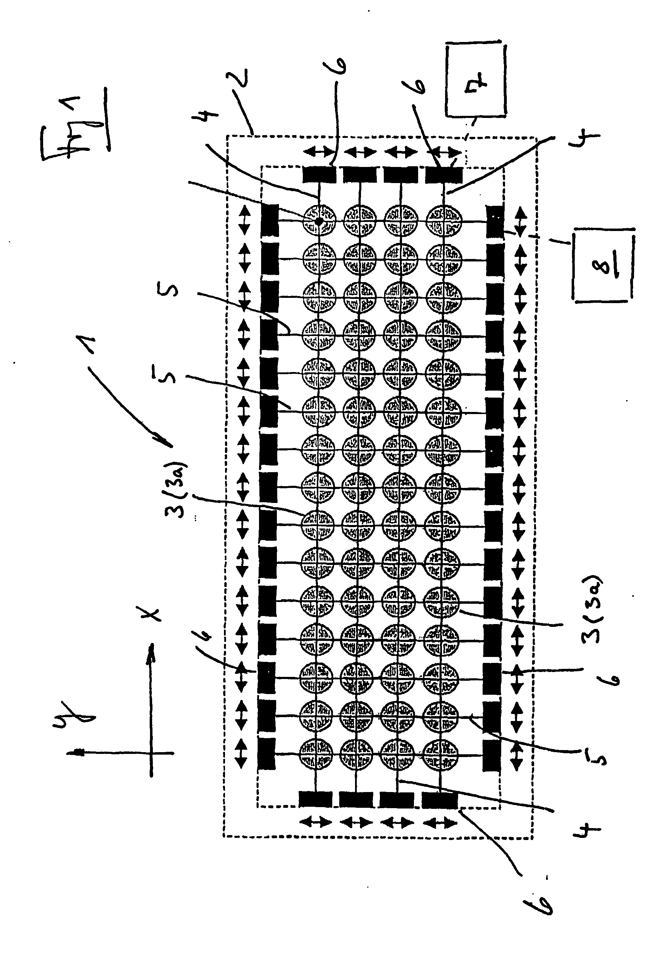

Sämtliche Führungs- und Betätigungselemente 4 und 5 sind weiterhin mit ihren Enden jeweils an Gleitstücken 6 gehalten, die ihrerseits am Rahmen 2 senkrecht zur Längserstreckung des zugehörigen Führungs- und Betätigungselementes 4 bzw. 5 verschiebbar geführt sind, wie dies mit den Doppelpfeilen in der Figur 1 angedeutet ist.
An jedem Kreuzungspunkt zwischen zwei Führungs- und Befestigungselementen 4, 5 ist ein Kreuzschlitten 3 vorgesehen, der an diesen Führungs- und Betätigungselementen 4 und 5 verschlebbar geführt ist.

Durch die Anordnung der Kreuzschlitten 3 an den Kreuzungspunkten der Führungs- und Betätigungselemente 4 bzw. 5 sind die Kreuzschlitten 3 in mehreren, sich in Richtung der X-Achse erstreckenden Reihen, d.h. bei der Darstellung der Figur 1 in insgesamt vier derartigen Reihen, und in mehreren, sich jeweils in der Y-Achse erstreckenden Spalten, d.h. bei der Darstellung der Figur 1 in insgesamt fünfzehn Spalten angeordnet.

Den Führungs- und Betätigungselementen 4 ist am Rahmen 2 mindestens ein Stellantrieb zugeordnet, der in der Figur 1 mit dem Block 7 angedeutet ist. Durch entsprechendes Betätigen oder Ansteuern des Stellantriebes 7 sind die Führungs- und Betätigungselemente 4 gesteuert quer zu ihrer Längserstreckung, d.h. in der Y-Achse verstell- bzw. verfahrbar, und zwar beispielsweise derart, dass der Abstand zwischen benachbarten Führungs- und Betätigungselementen 4 und damit auch der Abstand zwischen den in Richtung der Y-Achse aneinander anschließenden Kreuzschlitten 3 gleichsinnig und jeweils um den selben oder aber um einen unterschiedlichen Weg verändert werden kann, aber beispielsweise unter grundsätzlicher Beibehaltung der Symmetrie der Kreuzschlitten-Anordnung im Bezug auf eine in der X-Z-Ebene liegende Rahmenmittelebene.

Den Führungs- und Betätigungselementen 6 ist ebenfalls mindestens ein in der Figur 1 mit dem Block 8 angedeuteter Stellantrieb zugeordnet. Durch entsprechendes Betätigen oder Ansteuern des Stellantriebes 8 sind die Führungs- und Betätigungselemente 5 gesteuert quer zu ihrer Längserstreckung, d.h. in der X-Achse verstell- bzw. verfahrbar, und zwar beispielsweise wiederum derart, dass der Abstand zwischen benachbarten Führungs- und Betatigungeelementen 5 und damit auch der Abstand zwischen den in Richtung der X-Achse aneinander anschließenden Kreuzschlitten 3 gleichsinnig und jeweils um den selben oder aber um einen unterschiedlichen Weg verändert werden kann, aber beispielsweise unter grundsätzlicher Beibehaltung der Symmetrie der Kreuzschlitten-Anordnung im Bezug auf eine in der Y-Z-Ebene liegende Rahmenmittelebene.

An jedem Kreuzschlitten 3 ist ein Behältergreifer in Form einer Packtulpe 9 vorgesehen, die über die Unterseite des Kreuzschlittens 3 in Richtung der Z-Achse vorsteht und mit der jeweils eine Flasche F an ihrer Flaschenmündung gegriffen werden kann.

Mit dem Packerkopf 1, der im praktischen Betrieb an einer Hub- und Transfereinrichtung für eine gesteuerte Hubbewegung in vertikaler Richtung, d.h. in der Z-Achse sowie für eine gesteuerte Transferbewegung In einer horizontalen Achse, z.B. in der Y-Achse vorgesehen ist, sind unterschiedlichste Betriebs- oder Arbeitsweisen möglich.

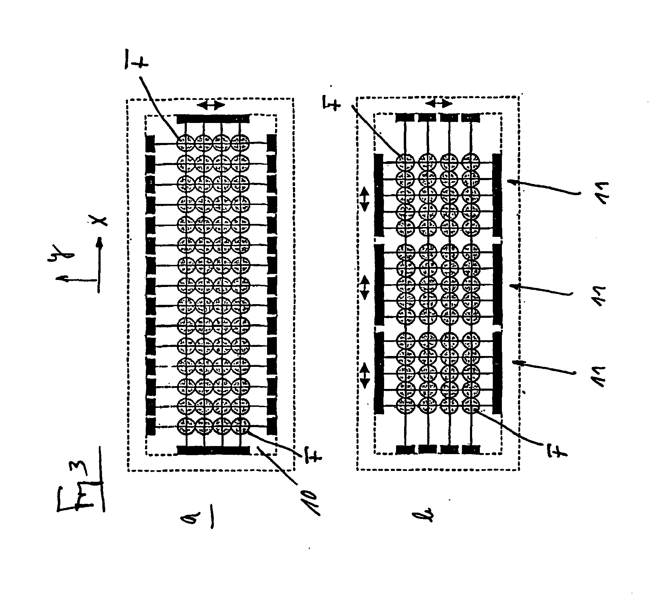

Die Figur 3 zeigt die Verwendung des Packerkopfes 1 zum Absetzen von Flaschengruppen in Falschenkästen. Entsprechend der Position a) der Figur 3 werden die Flaschen F über einen Transporteur einem Aufnahmebereich oder Packertisch 10 zugeführt, auf dem die Flaschen F in mehreren, sich jeweils in Richtung der X-Achse erstreckenden Reihen bzw. Gassen bereitstehen, und zwar bei der dargestellten Ausführungsform in vier Reihen oder Gassen mit jeweils fünfzehn Flaschen F derart, dass die Flaschen F in der Y-Achse fünfzehn Spalten mit vier einander unmittelbar benachbarten Flaschen F bilden.

Diese am Packtisch 10 bereitstehende Flaschenformation wird mit dem Packerkopf 1 bzw. mit dessen Packtulpen 9 gegriffen, nach dem Abheben vom Packertisch 10 durch gesteuertes Verstellen der Führungs- und Betätigungselemente 4 und 5 quer zu ihrer Längserstreckung neu formiert, sodass die Flaschen F dann der Position b) entsprechend zum Einsetzen in drei Flaschenkästen drei Flaschengruppen 11 bilden, in denen jeweils in vier in Richtung der X-Achse orientierten Reihen die Flaschen F dicht aneinander abschließen und diese Flaschenreihen in Richtung der Y-Achse voneinander beabstandet sind.

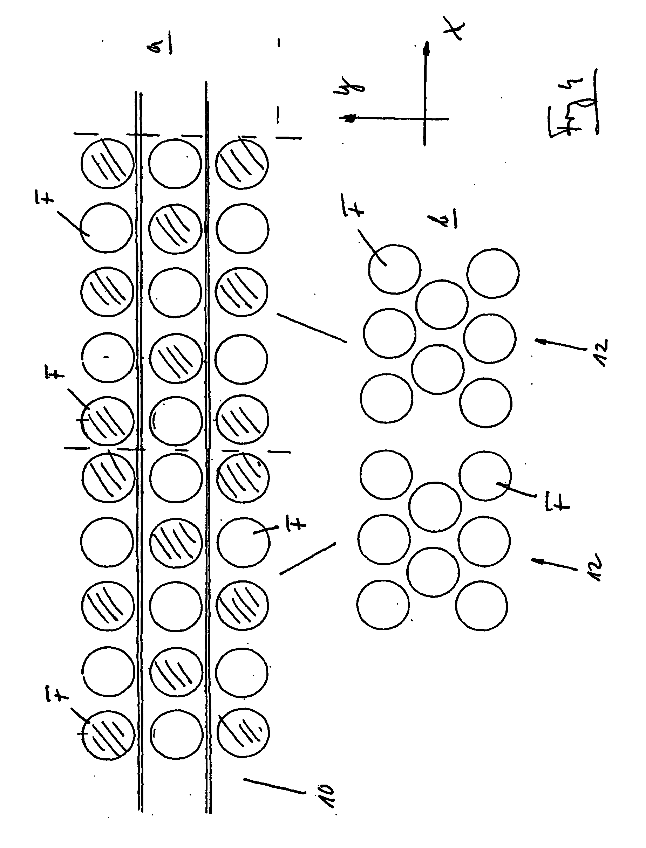

Die Figur 4 zeigt in den Positionen a) und b) eine andere Arbeitsweise, bei der auf dem Packertisch 10 von den über einen Transporteur zugeführten Flaschen F drei Reihen in jeweils getrennten Gassen gebildet werden, und zwar derart, dass die Flaschen F in jeder Reihe dicht aneinander anschließen und jeder Flasche in einer Reihe einer Flaschen F weiteren Reihe beabstandet in Richtung der Y-Achse benachbart ist, die Flaschen F in dieser Formation also wiederum in senkrecht zueinander verlaufenden Reihen und Spalten angeordnet sind.

Von der auf dem Packtisch 10 gebildeten Formation werden mit den individuell ansteuerbaren Packtulpen 9 des Packerkopfes 1 lediglich die in der Position a) schraffierten Flaschen F gegriffen und abgenommen. Nach dem Abheben der Flaschenformation werden durch entsprechende Ansteuerung der Führungs- und Betätigungselemente 4 und 5 und damit der Kreuzschlitten 3 zwei Flaschengruppen 12 mit jeweils drei sich in Richtung der X-Achse erstreckenden Reihen gebildet, von denen die beiden äußeren Reihen jeweils drei Flaschen F und die mittlere Reihe nur zwei Flaschen F aufweisen, die gegenüber den Flaschen F der äußeren Reihe auf Lücke versetzt sind. Dies wird durch eine entsprechende Verstellung der Führungs- und Betätigungselemente 5 im Sinne einer Reduzierung des Abstandes der Kreuzschlitten 3 für jede Flaschengruppe 12 in der X-Achse sowie durch eine entsprechende Verstellung der Führungs- und Betätigungselemente 4 im Sinne einer Reduzierung des Abstandes der Kreuzschlitten 3 in der Y-Achse erreicht.

Vorstehend wurde davon ausgegangen, dass der Packerkopf 1 zum Aufnehmen der Flaschen F als Flaschengruppen von dem Packertisch 10 (Abnahmebereich) und zum Einsetzen der Flaschen F als Flaschengruppen 11 bzw. 12 in Flaschenkästen (Ablagebereich) dient. Selbstverständlich kann der Packerkopf 1 in analoger Weise umgekehrt auch zur Entnahme von Flaschen F aus Kästen in jeweils einer beispielsweise durch die Ausbildung des Kastens vorgegebenen Formation und zum Absetzen der Flaschen in einer umgeformten Formation auf einem Transporteur oder Flachen- oder Packertisch 10 dienen.

Durch die Anordnung der Kreuzschlitten 3 an den Führungs- und Betätigungselementen 4 und 5 ist es bei der Ausführung der Figur 1 grundsätzlich nur möglich, sämtliche an dem jeweiligen Führungselement 4 bzw. 5 vorgesehenen Kreuzschlitten und damit auch die zugehörigen Packtulpen 9 gemeinsam In der X-Achse (durch Verstellen des betreffenden Führungs- oder Betätigungselementes 5) oder in der Y-Achse (durch Verstellen des betreffenden Führungs- oder Betätigungselementes 4) zu verstellen.

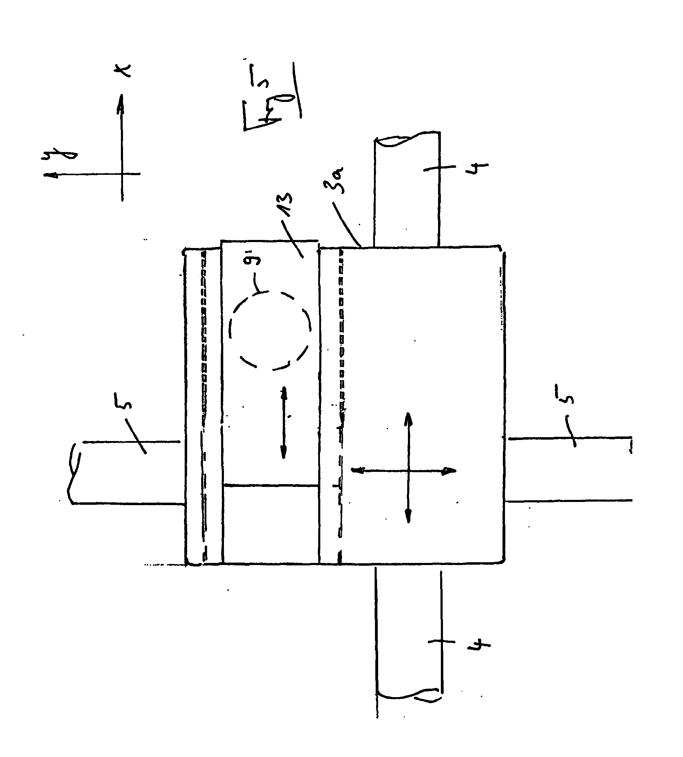

Die Figur 5 zeigt nun in sehr schematischer Darstellung in Draufsicht einen Kreuzschlitten 3a eines Packerkopfes, der (Kreuzschlitten 3a) hinsichtlich der Umformierung der am Packerkopf gehaltenen Flaschengruppen einen höheren Freiheitsgrad aufweist, und zwar dadurch, dass der Packerkopf relativ zu dem ihn aufnehmenden Kreuzschlitten 3a in der X-Y-Ebene gesteuert verstellbar oder verfahrbar vorgesehen ist, und zwar z.B. an einem Hilfsschlitten 13, der durch einen eigenständigen Stellantrieb linear in dieser Ebene verstellbar ist, beispielsweise in der X-Achse. Grundsätzlich kann die Verstellung der Packtulpe 9 relativ zum Kreuzschlitten 3a auch durch eine Dreh- oder Schwenkbewegung erfolgen. Der Packerkopf ist dann so ausgeführt, dass nur einige der Kreuzschlitten als Kreuzschlitten 3a mit der zusätzlichen Verstellmöglichkeit oder Verstellachse für die Packtulpe 9 ausgebildet sind, z.B. einige Kreuzschlitten jeder zweiten, sich in der X-Achse erstreckenden Schlittenreihe. Beispielsweise bei einem Packerkopf mit in drei sich in Richtung der X-Achse erstreckenden Reihen von Kreuzschlitten weist dann nur die mittlere Reihe Kreuzschlitten 3a auf, während die äußerte Reihen von Kreuzschlitten 3 gebildet sind. Auch in der mittleren Reihe ist dann beispielsweise nur jeder zweite Kreuzschlitten ein Kreuzschlitten 3a mit der zusätzlichen Verstellachse für die Packtulpe 9, während ansonsten auch in der mittleren Reihe des Packerkopfes bzw. der Kreuzschlittenanordnung Kreuzschlitten 3 verwendet sind.

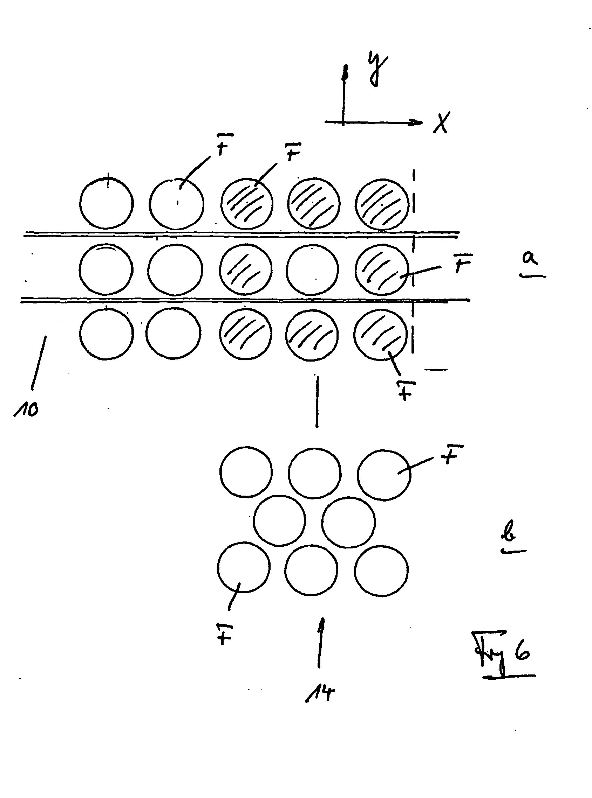

Die Figur 6 zeigt eine mögliche Arbeitsweise des teilweise mit den Kreuzschlitten 3a versehenen Packerkopfes. Am Packertisch 10 werden die Flaschen F wieder in einer Formation bereitgestellt, die drei in jeweils getrennten Gassen gebildete und sich in der X-Achse erstreckende Flaschenreihen aufweist und bei der jeder Flasche einer Flaschenreihe in der Y-Achse einer Flasche einer weiteren Reihe benachbart ist, die Flaschen F also auf dem Packertisch 10 in einer Formation mit mehreren sich in der X-Achse erstreckenden Reihen und mit mehreren sich in der Y-Achse erstreckenden Spalten angeordnet sind. Mit dem Packerkopf bzw. mit den individuell steuerbare Packtulpen dieses Packerkopfes werden dann nur die in der Position a) durch Schraffur gekennzeichneten Flaschen F gegriffen, und zwar jeweils drei Flaschen F jeder äußeren Reihen und zwei Flaschen F der mittleren Reihe, die (Flaschen) in dieser mittleren Reihe um den doppelten Flaschenabstand voneinander beabstandet sind. Nach dem Abheben der Flaschen F vom Packertisch 10 erfolgt die Umformierung der gegriffenen, aus insgesamt acht Flaschen F bestehenden Flaschengruppe in der Weise, dass die Flaschengruppe 14 nach dem Absetzen wiederum zwei äußere, sich in Richtung der X-Achse erstreckende Reihen mit jeweils drei Flaschen F und eine mittlere, sich ebenfalls in Richtung der X-Achse erstreckende Reihe allerdings nur mit zwei Flaschen F aufweist, die gegenüber den Flaschen der äußeren Reihe auf Lücke versetzt sind. Diese neue Formation für die Flaschegruppe 14 wird dadurch erreicht, dass die Flaschen F der mittleren Reihe an Kreuzschlitten 3a gehalten sind, mit denen zusätzlich zu der allgemeinen Verstellung der Kreuzschlitten über die Führungs- und Betätigungselemente 4 und 5 eine individuelle Einstellung der Packtulpen 9 in der X-Achse möglich ist.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegende Erfindungsgedanke verlassen wird.

### Bezugszeichenliste

- 1: Packerkopf
- 2: Rahmen des Packerkopfes
- 3, 3a: Kreuzschlitten
- 4, 5: Führungs- und Betätigungselemente
- 6: Gleitstück
- 7, 8: Stellantrieb
- 9: Packtulpe oder Greifer für Flaschen F
- 10: Packertisch
- 11, 12: Flaschengruppe
- 13: Hilfsschlitten
- 14: Flaschengruppe

- F: Flasche
- X: X-Achse
- Y: Y-Achse
- Z: Z-Achse

## Patentansprüche

1. Packerkopf zur Verwendung bei einer Vorrichtung zum Abnehmen von in einer ersten Formation an einem Abnahmebereich bereitstehenden Behältergruppen sowie zum Absetzen der Behältergruppen (11, 12, 14) an einem Ablagebereich, mit mehreren Behältergreifem oder Packtulpen (9) zum Greifen jeweils eines Behälters (F), wobei die Packtulpen (9) jeweils einzeln an Verstellschlitten (3a) gehalten sind, und wobei die Packtulpen (9) an einem Packerkopfrahmen (2) in einer Verstellebene (X-Y-Ebene) senkrecht oder im Wesentlichen senkrecht zur Achse des jeweiligen Behälters (F) zur Änderung der Formation oder Anordnung der Behälter (F) in der Behältergruppe am Packerkopf (1) beweglich sind, wobei die Packtulpen (9) jeweils einzeln oder als Gruppe durch wenigstens einen Stellantrieb (7, 8) gesteuert verfahrbar am Packerkopfrahmen (2) vorgesehen sind, **dadurch gekennzeichnet, dass** zumindest ein Verstellschlitten (3a) so ausgebildet ist, dass die Packtulpe(9) relativ zu diesem in der X-Y-Ebene eine gesteuerte lineare Bewegung und/oder Drehbewegung ausführen kann.

2. Packerkopf nach Anspruch 1, **dadurch gekennzeichnet, dass** die Packtulpen (5) in der Verstellebene (X-Y-Ebene) In wenigstens zwei senkrecht zueinander oder im Wesentlichen senkrecht zueinander verlaufenden Verstellachsen (X-Achse, Y-Achse) gesteuert verfahrbar sind.

3. Packerkopf nach Anspruch 1 oder 2, **dadurch gekennzeichnet, dass** die Packtulpen (5) an Verstellschlitten (3, 3a) vorgesehen sind, und dass die Verstellschlitten (3, 3a) Individuell in der Verstellebene oder in den Verstellachsen (X-Achse, Y-Achse) gesteuert verfahrbar sind.

4. Packerkopf nach einem der vorhergehenden Ansprüche, **dadurch gekennzeichnet, dass** die Packtulpen (5) an Verstellschlitten (3, 3a) vorgesehen sind, und dass die Verstellschlitten (3, 3a) gruppenweise in der Verstellebene oder in den Verstellachsen (X-Achse, Y-Achse) gesteuert verfahrbar sind.

5. Packerkopf nach einem der vorhergehenden Ansprüche, **dadurch gekennzeichnet, dass** die Verstellschlitten (3, 3a) jeweils gruppenweise an einem Führungselement (4, 5) in einer Verstellachse (X-Achse, Y-Achse) verstellbar vorgesehen sind.

6. Packerkopf nach Anspruch 5, **dadurch gekennzeichnet, dass** die Verstellschlitten (3, 3a) mit dem jeweiligen Führungselement (4, 5) in einer senkrecht zur Längserstreckung dieses Führungselementes (4, 5) verlaufenden Verstellachse (Y-Achse, X-Achse) gesteuert verfahrbar sind.

7. Packerkopf nach einem der vorhergehenden Ansprüche, **dadurch gekennzeichnet, dass** die Verstellschlitten als Kreuzschlitten (3, 3a) an jeweils zwei sich kreuzenden Führungselementen (4, 5) gesteuert verfahrbar sind.

8. Packerkopf nach Anspruch 7, **dadurch gekennzeichnet, dass** die Führungselemente (4, 5) zum Verstellen der Kreuzschlitten (3, 3a) senkrecht zu ihrer Längserstreckung durch Stellantriebe (7, 8) gesteuert verfahrbar sind.

9. Packerkopf nach einem der vorhergehenden Ansprüche, **dadurch gekennzeichnet, dass** die Führungselemente (4, 5) von jeweils wenigstens einer Führungsschiene oder Führungsstange gebildet sind.

## Claims

1. Packer head for use in a device for picking up groups of containers standing ready in an initial formation at an acceptance area and putting down groups of containers (11, 12, 14) on a depositing area with several container grippers or packing gripper heads (9) for gripping one container (F) in each case, in which the packing gripper heads (9) in each case are individually held on moving slides (3a), and in which the packing gripper heads (9) are movable on a packer head frame (2) in a plane of movement (X-Y plane) perpendicular or basically perpendicular to the axis of the specific container (F) to change the formation or arrangement of the containers (F) in the group of containers at the packer head (1), in which the packing gripper heads (9) are intended to be moved each individually or as a group controlled by at least one actuator (7, 8) on the packer head frame (2), **characterised in that** at least one moving slide (3a) is designed so that relative to the latter in the X-Y plane the packing gripper head (9) can carry out a controlled linear movement and/or rotary movement.

2. Packer head according to claim 1, **characterised in that** the packing gripper heads (9) can be controlled to move in the plane of movement (X-Y plane) in at least two movement axes (X-axis, Y-axis) running perpendicular to one another or basically perpendicular to one another.

3. Packer head according to claim 1 or 2, **characterised in that** the packing gripper heads (9) are envisaged on moving slides (3, 3a), and that the moving slides (3, 3a) can be controlled to move individually in the plane of movement or in the movement axes (X-axis, Y-axis).

4. Packer head according to one of the preceding claims, **characterised in that** the packing gripper heads (9) are planned on moving slides, (3, 3a) and that the moving slides (3, 3a) can be controlled to move as a group in the plane of movement or in the movement axes (X-axis, Y-axis).

5. Packer head according to one of the preceding claims, **characterised in that** the moving slides (3, 3a) are in each case planned in groups and can be moved on a guiding element (4, 5) in a movement axis (X-axis, Y-axis).

6. Packer head according to claim 5, **characterised in that** the moving slides (3, 3a) can be controlled to move with the respective guiding element (4, 5) in a movement axis (Y-axis, X-axis) running perpendicular to the longitudinal extent of this guiding element (4, 5).

7. Packer head according to one of the preceding claims, **characterised in that** the moving slides can be controlled to move as cross slides (3, 3a) in each case on two guiding elements (4, 5) crossing one another.

8. Packer head according to claim 7, **characterised in that** the guiding elements (4, 5) for moving the cross slides (3, 3a) can be controlled to move perpendicularly to their longitudinal extent by actuators (7, 8).

9. Packer head according to one of the preceding claims, **characterised in that** the guiding elements (4, 5) in each case consist of at least one guide rail or guide rod.

## Revendications

1. Tête de robot d'emballage destinée à être utilisée pour un dispositif de prélèvement de groupes de récipients prêts dans une première formation sur une zone de prélèvement ainsi que de dépôt de groupes de récipients (11, 12, 14) sur une zone de dépôt, avec plusieurs pinces pour récipients ou tulipes d'emballage (9) respectivement pour la préhension d'un récipient (F), les tulipes d'emballage (9) étant chacune maintenues individuellement sur des chariots de réglage (3a), et les tulipes d'emballage (9) étant mobiles sur un cadre de tête de robot d'emballage (2) dans un plan de réglage (plan X-Y) perpendiculairement ou sensiblement perpendiculairement à l'axe du récipient respectif (F) pour la modification de la formation ou de l'agencement des récipients (F) dans le groupe de récipients sur la tête de robot d'emballage (1), les tulipes d'emballage (9) étant prévus déplaçables respectivement individuellement ou en groupe par la commande d'au moins un mécanisme de commande (7, 8), **caractérisée en ce qu'**au moins un chariot de réglage (3a) est conçu de sorte que , par rapport à celui-ci, la tulipe d'emballage (9) puisse réaliser un mouvement linéaire et/ou dans le plan X-Y un mouvement rotatif commandé.

2. Tête de robot d'emballage selon la revendication 1, **caractérisée en ce que** les tulipes d'emballage (9) peuvent être déplacées de manière commandée dans le plan de réglage (plan X-Y) dans au moins deux axes de réglage (axe X, axe Y) s'étendant perpendiculairement ou sensiblement perpendiculairement l'un à l'autre.

3. Tête de robot d'emballage selon la revendication 1 ou 2, **caractérisée en ce que** les tulipes d'emballage (9) sont prévues sur des chariots de réglage (3, 3a) et **en ce que** les chariots de réglage (3, 3a) peuvent être déplacés de manière commandée individuellement dans le plan de réglage ou dans les axes de réglage (axe X, axe Y).

4. Tête de robot d'emballage selon l'une quelconque des revendications précédentes, **caractérisée en ce que** les tulipes d'emballage (9) sont prévues sur des chariots de réglage (3, 3a) et **en ce que** les chariots ajustables (3, 3a) peuvent être déplacés de manière commandée par groupe dans le plan de réglage ou dans les axes de réglage (axe X, axe Y).

5. Tête de robot d'emballage selon l'une quelconque des revendications précédentes, **caractérisée en ce que** les chariots de réglage (3, 3a) sont prévus ajustables respectivement par groupe sur un élément de guidage (4, 5) dans un axe de réglage (axe X, axe Y).

6. Tête de robot d'emballage selon la revendication 5, **caractérisée en ce que** les chariots de réglage (3, 3a) peuvent être déplacés de manière commandée avec l'élément de guidage respectif (4, 5) dans un axe de réglage (axe Y, axe X) s'étendant perpendiculairement à une dimension longitudinal de cet élément de guidage (4, 5).

7. Tête de robot d'emballage selon l'une quelconque des revendications précédentes, **caractérisée en ce que** les chariots de réglage peuvent être déplacés comme des chariots à mouvements croisés (3, 3a) de manière commandée respectivement sur deux éléments de guidage (4, 5) se croisant.

8. Tête de robot d'emballage selon la revendication 7, **caractérisée en ce que** les éléments de guidage (4, 5) peuvent être déplacés de manière commandée pour le réglage des chariots à mouvements croisés (3, 3a) perpendiculairement à leur développement longitudinal par des mécanismes de commande (7, 8).

9. Tête de robot d'emballage selon l'une quelconque des revendications précédentes, **caractérisée en ce que** les éléments de guidage (4, 5) sont formés respectivement par au moins un rail de guidage ou une tige de guidage.
